# EUROPEAN PATENT APPLICATION

(11) **EP 4 395 184 A1**
(43) Date of publication of application: **03.07.2024**
(21) Application number: 22874745.7
(22) Date of filing: 21.09.2022
(51) Int. Cl.: H04B 1/00

(54) **COMMUNICATION METHOD AND DEVICE**

(30) Priority: 28.09.2021 CN 202111143993
(71) Applicant: Huawei Technologies Co., Ltd., Shenzhen, Guangdong 518129 (CN)
(72) Inventor: DOU, Jianqing, Shenzhen, Guangdong 518129 (CN); ZHU, Youtuan, Shenzhen, Guangdong 518129 (CN); ZHU, Xudong, Shenzhen, Guangdong 518129 (CN)
(74) Representative: MERH-IP Matias Erny Reichl Hoffmann Patentanwälte PartG mbB
(86) International application number: PCT/CN2022/120290
(87) International publication number: WO 2023/051358

(57) **Abstract**

This application provides a communication device, including: a first radio frequency unit, a second radio frequency unit, a switch control unit, and a first signal processing channel. The first signal processing channel includes a first analog-to-digital conversion unit, a first intermediate frequency channel unit, and a first baseband processing unit. The switch control unit is configured to determine, based on resource control information, to connect the first radio frequency unit or the second radio frequency unit to the first signal processing channel. A first radio frequency band in the first radio frequency unit is different from a second radio frequency band in the second radio frequency unit. In this way, different frequency bands may share one radio frequency signal processing channel, thereby optimizing a processing channel, reducing costs, and miniaturizing a communication design.

## Description

This application claims priority to Chinese Patent Application No. 202111143993.4, filed with the China National Intellectual Property Administration on September 28, 2021 and entitled "COMMUNICATION METHOD AND DEVICE", which is incorporated herein by reference in its entirety.

### TECHNICAL FIELD

This application relates to the communication field, and more specifically, to a communication method and device.

### BACKGROUND

Currently, in a 4G or 5G network architecture, 4G long term evolution (long term evolution, LTE) may coexist with a 5G millimeter-wave network. 4G may provide large-scale communication coverage, and 5G may provide high-speed access and capacity enhancement in a hotspot area. To reduce construction costs, a base station of a 5G millimeter wave may be deployed on an existing base station tower of 4G LTE, or this may be considered as that a base station of a 5G millimeter wave (a high frequency) and a base station of 4G LTE (a low frequency) are located at a same location.

The high frequency (for example, higher than 6 GHz) has a feature of a high data transmission rate, but coverage is limited. In comparison with low frequency communication, high frequency communication has the following features: (1) a high path loss; (2) strong spatial sparseness; (3) unideal high frequency components; (4) poor reciprocity between an uplink and a downlink. The high frequency communication faces more challenges due to these problems. The low frequency (for example, lower than 6 GHz) has a feature of wide coverage, but a data transmission rate is lower than that of the high frequency. Currently, academic and engineering circles mainly perform related researches on coordination between the high frequency and the low frequency. For example, a high frequency processing procedure and performance are improved based on a correlation between high frequency space domain information and low frequency space domain information and according to an algorithm.

However, most technologies focus on using the low frequency to assist signal transmission of the high frequency. In actual application, problems of high costs and large volumes exist in the technologies, and need to be urgently resolved.

### SUMMARY

This application provides a communication method and device. A switch control unit may determine, based on resource control information, to connect a first radio frequency unit or a second radio frequency unit to a first signal processing channel. A radio frequency band in the first radio frequency unit is different from a radio frequency band in the second radio frequency unit. In this way, different frequency bands may share one signal processing channel, thereby optimizing a processing channel, reducing costs, and miniaturizing a communication design.

A first aspect provides a communication device, including: a first radio frequency unit, a second radio frequency unit, a switch control unit, and a first signal processing channel. The first signal processing channel includes a first analog-to-digital conversion unit, a first intermediate frequency channel unit, and a first baseband processing unit. The switch control unit is configured to determine, based on resource control information, to connect the first radio frequency unit or the second radio frequency unit to the first signal processing channel. A first radio frequency band in the first radio frequency unit is different from a second radio frequency band in the second radio frequency unit.

In this application, a radio frequency unit may also be understood as a remote radio unit (remote radio unit, RRU), and may also be referred to as a transceiver unit, a transceiver, a transceiver circuit, or the like. The RRU may include at least one antenna, and the RRU may be configured to receive and send a radio frequency signal.

The first signal processing channel in this application may be a channel for processing a received or sent radio frequency signal. For example, the signal processing channel may include an analog-to-digital conversion unit, an intermediate frequency channel unit, and a baseband processing unit. It should be understood that the signal processing channel may further include another unit. This is not limited. With the evolution of technologies, this application does not exclude a case in which the signal processing channel may implement a function of receiving or sending the radio frequency signal via another software, unit, or component. The unit included in the signal processing channel in this application is merely an example.

The "resource control information" in this application may be, for example, configuration information of resource units of different radio frequency bands. The resource unit in this application may be, for example, a frame (frame), a subframe (subframe), a timeslot (timeslot), or a symbol (symbol). For example, in this application, a design of timeslot staggering may be used, to implement time division sharing of an uplink channel for different frequency bands, or implement time division sharing of an uplink channel or a downlink channel for different frequency bands. The "timeslot staggering" in this application may mean that for various subcarrier spacings, minimum timeslot (timeslot) units of the subcarrier spacings are staggered.

The "resource control information" in this application may alternatively be, for example, information about network resource congestion, or load information of an antenna. In this case, the switch control unit may alternatively separately connect different radio frequency bands to the first signal processing channel based on the resource control information.

In this application, there may be a plurality of specific implementations of the "resource control information". Provided that the different radio frequency bands can be separately connected to the signal processing channel based on the resource control information in a technical solution, the technical solution falls within the protection scope of this application. For ease of understanding, in the following implementation, an example in which the "resource control information" is timeslot configuration information is mainly used for description.

The resource control information in this application may be obtained from a base station, or may be obtained from a core network, or may be obtained from another device. This is not limited in this application.

There may be a plurality of cases in a specific implementation process of the "different radio frequency bands" in this application. For example, a low frequency band #B1, a low frequency band #B2, and a low frequency band #B3 may be understood as different frequency bands. For example, a high frequency band #B1, a high frequency band #B2, and a high frequency band #B3 may also be understood as different frequency bands. For another example, a low frequency band #B1, a high frequency band #B1, and a high frequency band #B3 may also be understood as different frequency bands.

Based on the foregoing technical solution, in this application, multiplexing of a signal processing channel may be implemented based on the resource control information, and a processing channel for different frequency bands may be shared. In comparison with a conventional technology in which a signal processing channel is designed for each frequency band, in the solution in this embodiment, timeslots of different frequency bands are staggered based on the resource control information, so that time division sharing of an uplink channel on two frequency bands is implemented, or time division sharing of an uplink channel or a downlink channel for different frequency bands is implemented, thereby reducing costs and miniaturizing a communication design. The technical solution in the following implementations in this application can implement the foregoing beneficial effects. In descriptions of the beneficial effects in the following implementations, same beneficial effects are not described again.

It should be noted that a device in this application may further include a control unit. The control unit is configured to send the resource control information to the switch control unit. In this application, the control unit may be configured to stagger the timeslots based on the resource control information, and may be further configured to control a frequency band for connecting to a channel.

In a possible manner, timeslot resources in the resource control information received by the control unit may be originally staggered, or this may be understood as that timeslot resources are staggered when the timeslot resources are configured by a network device. In an example, the control unit may send the resource control information to the switch control unit, and the switch control unit may determine, based on the resource control information, a signal processing channel used by a frequency band in a specific time domain resource unit. In another possible implementation, the timeslot resources in the resource control information received by the control unit may not be staggered, and the timeslots are staggered by the control unit. In an example, in this case, the control unit may first determine that a processing channel of a resource of a frequency band #C1 may be shared with a processing channel of a resource of a frequency band #C2 (where for example, an uplink processing channel may be shared). In this case, the control unit may configure timeslot structures of the frequency band #C1 and the frequency band #C2, for example, stagger an uplink resource (for example, an uplink timeslot) of the frequency band #C1 and an uplink resource (for example, a downlink timeslot) of a frequency band #B2. Then, timeslot configuration information is included in the resource control information and sent to the switch control unit, and the switch control unit may determine, based on the timeslot configuration information, the signal processing channel used by the frequency band in the specific time domain resource unit.

In this application, the timeslot staggering may also include a plurality of cases. The following specific embodiments are specifically described with reference to the accompanying drawings.

It should be noted that the technical solution of this application may be applied to the network device, or may be applied to a terminal device. This is not limited.

In a possible implementation, the resource control information includes configuration information of resource units of the first radio frequency band and the second radio frequency band.

Based on the foregoing technical solution, in this application, based on the configuration information of the resource units, a signal processing channel for different frequency bands may be multiplexed, in other words, sharing of the processing channel for the different frequency bands may be implemented.

In a possible implementation, when the first signal processing channel is an uplink signal processing channel, an uplink timeslot of the first radio frequency band is staggered with an uplink timeslot of the second radio frequency band.

Based on the foregoing technical solution, in this application, timeslots of different frequency bands are designed, so that uplink timeslots of the different frequency bands are staggered, and multiplexing of an uplink signal processing channel for the different frequency bands may be implemented, in other words, sharing of the processing channel for the different frequency bands may be implemented.

In a possible implementation, the device further includes: a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

Based on the foregoing technical solution, in this application, when there are a plurality of radio frequency bands, an uplink signal processing channel may be multiplexed, and a plurality of processing channels for a plurality of frequency bands may be shared.

In a possible implementation, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered.

Based on the foregoing technical solution, in this application, a processing channel is optimized and timeslots of the different frequency bands are designed, so that the timeslots of the different frequency bands are staggered, to implement time division sharing of uplink channels on the different frequency bands. In addition, when there are both a high frequency band and a low frequency band in a plurality of frequency bands, and a total bandwidth resource of channels remains unchanged, a plurality of low frequency channels may be multiplexed by the high frequency band, so that a high frequency processing channel and low frequency processing channels are converged.

In a possible implementation, when the first signal processing channel is an uplink signal processing channel or a downlink signal processing channel, an uplink timeslot of the first radio frequency band is staggered with an uplink timeslot of the second radio frequency band, and a downlink timeslot of the first radio frequency band is staggered with a downlink timeslot of the second radio frequency band.

Based on the foregoing technical solution, in this application, uplink timeslots of different frequency bands are designed to be staggered, or downlink timeslots of different frequency bands are designed to be staggered, so that an uplink signal processing channel or a downlink signal processing channel for the different frequency bands may be multiplexed. In other words, a signal processing channel for the different frequency bands may be shared.

In a possible implementation, the device further includes: a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

Based on the foregoing technical solution, in this application, when there are a plurality of radio frequency bands, an uplink signal processing channel or a downlink signal processing channel may be multiplexed, and a plurality of processing channels for a plurality of frequency bands may be shared.

In a possible implementation, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered, and downlink timeslots of two radio frequency bands with different frequency bands are staggered.

Based on the foregoing technical solution, in the solution in this embodiment, a processing channel is optimized and timeslots of different frequency bands are designed, so that uplink timeslots of the different frequency bands are staggered or downlink timeslots of the different frequency bands are staggered, to implement time division sharing of an uplink channel on the different frequency bands or a downlink channel on the different frequency bands.

In a possible implementation, a subcarrier spacing of the first radio frequency band and a subcarrier spacing of the second radio frequency band are the same, or a spacing of a resource unit of the first radio frequency band, a spacing of a resource unit of the second radio frequency band, and a spacing of a resource unit of the third radio frequency band are the same. For example, a resource unit may be a spacing of the resource unit. For example, the spacing of the resource unit may be a subcarrier spacing.

Based on the foregoing technical solution, in this application, when subcarrier spacings of different frequency bands are the same, multiplexing of an uplink signal processing channel or a downlink signal processing channel may be implemented, and a plurality of processing channels for a plurality of frequency bands may be shared.

In a possible implementation, there are one or more switch control units.

Based on the foregoing technical solution, there may be a plurality of switch control units in this application. In other words, different radio frequency units may be controlled by different switch control units, so that processing channels are more flexibly controlled.

A second aspect provides a communication apparatus. The apparatus includes the communication device in any implementation of the first aspect.

In a possible implementation, the communication apparatus may include a processor. Optionally, the apparatus may further include a memory. The processor is coupled to the memory, and may be configured to execute instructions in the memory. Optionally, the apparatus further includes a communication interface. The processor is coupled to the communication interface.

In an implementation, the apparatus is a terminal device. When the apparatus is the terminal device (for example, user equipment), the communication interface may be a transceiver or an input/output interface.

In another implementation, the apparatus is a chip disposed in a terminal device. When the apparatus is the chip disposed in the terminal device, the communication interface may be an input/output interface.

In an implementation, the apparatus is a network device. When the apparatus is the network device (for example, a base station), the communication interface may be a transceiver or an input/output interface.

In another implementation, the apparatus is a chip disposed in a network device. When the apparatus is the chip disposed in the network device, the communication interface may be an input/output interface.

Specifically, in a possible implementation, the apparatus includes a first radio frequency unit, a second radio frequency unit, a switch control unit, and a first signal processing channel. The first signal processing channel includes a first analog-to-digital conversion unit, a first intermediate frequency channel unit, and a first baseband processing unit. The switch control unit is configured to determine, based on resource control information, to connect the first radio frequency unit or the second radio frequency unit to the first signal processing channel. A first radio frequency band in the first radio frequency unit is different from a second radio frequency band in the second radio frequency unit.

In a possible implementation, the apparatus further includes a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

In a possible implementation, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered.

In a possible implementation, when the first signal processing channel is an uplink signal processing channel or a downlink signal processing channel, an uplink timeslot of the first radio frequency band is staggered with an uplink timeslot of the second radio frequency band, and a downlink timeslot of the first radio frequency band is staggered with a downlink timeslot of the second radio frequency band.

In a possible implementation, the apparatus further includes a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

In a possible implementation, at least two of the first radio frequency band, the second radio frequency band, and a third radio frequency band of the third radio frequency unit are different. When the first signal processing channel and the second signal processing channel are uplink signal processing channels or downlink signal processing channels, uplink timeslots of two radio frequency bands with different frequency bands are staggered, and downlink timeslots of two radio frequency bands with different frequency bands are staggered.

In a possible implementation, there are one or more switch control units.

In a possible implementation, the apparatus further includes a control unit. The control unit is configured to send the resource control information to the switch control unit, and the control unit is configured to stagger timeslots based on the resource control information.

A third aspect provides a communication method, and the method includes: A switch control unit determines, based on resource control information, to connect a first radio frequency unit or a second radio frequency unit to a first signal processing channel. A first radio frequency band in the first radio frequency unit is different from a second radio frequency band in the second radio frequency unit. The first signal processing channel includes a first analog-to-digital conversion unit, a first intermediate frequency channel unit, and a first baseband processing unit.

In a possible implementation, the resource control information includes configuration information of resource units of the first radio frequency band and the second radio frequency band.

In a possible implementation, when the first signal processing channel is an uplink signal processing channel, an uplink timeslot of the first radio frequency band is staggered with an uplink timeslot of the second radio frequency band.

In a possible implementation, the method further includes: a third radio frequency unit and a second signal processing channel are included. The second signal processing channel is connected to the first signal processing channel. The second signal processing channel includes a second analog-to-digital conversion unit and a second intermediate frequency channel unit. The connecting, by a switch control unit, a first radio frequency unit or a second radio frequency unit to a first signal processing channel based on resource information includes: The switch control unit connects one or more of the first radio frequency unit, the second radio frequency unit, and the third radio frequency unit to the first signal processing channel and/or the second signal processing channel based on the resource information.

In a possible implementation, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered.

In a possible implementation, when the first signal processing channel is an uplink signal processing channel or a downlink signal processing channel, an uplink timeslot of the first radio frequency band is staggered with an uplink timeslot of the second radio frequency band, and a downlink timeslot of the first radio frequency band is staggered with a downlink timeslot of the second radio frequency band.

In a possible implementation, a third radio frequency unit and a second signal processing channel are included. The second signal processing channel is connected to the first signal processing channel. The second signal processing channel includes a second analog-to-digital conversion unit and a second intermediate frequency channel unit. The connecting, by a switch control unit, a first radio frequency unit or a second radio frequency unit to a first signal processing channel based on resource information includes: The switch control unit connects one or more of the first radio frequency unit, the second radio frequency unit, and the third radio frequency unit to the first signal processing channel and/or the second signal processing channel based on the resource information.

In a possible implementation, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered, and downlink timeslots of two radio frequency bands with different frequency bands are staggered.

In a possible implementation, a spacing of a resource unit of the first radio frequency band and a spacing of a resource unit of the second radio frequency band are the same, or a spacing of the resource unit of the first radio frequency band, a spacing of the resource unit of the second radio frequency band, and a spacing of a resource unit of the third radio frequency band are the same.

In a possible implementation, there are one or more switch control units.

In a possible implementation, the method further includes a control unit. The control unit sends the resource control information to the switch control unit, and the control unit staggers timeslots based on the resource control information.

A fourth aspect provides a communication apparatus, including a processor. The processor is coupled to a memory, and may be configured to execute instructions that are in the memory, to implement the method in any possible implementation of the third aspect. Optionally, the apparatus further includes the memory. Optionally, the apparatus further includes a communication interface. The processor is coupled to the communication interface.

In an implementation, the apparatus is a terminal device. When the apparatus is the terminal device, the communication interface may be a transceiver or an input/output interface.

In another implementation, the apparatus is a chip disposed in a terminal device. When the apparatus is the chip disposed in the terminal device, the communication interface may be an input/output interface.

In an implementation, the apparatus is a network device. When the apparatus is the network device, the communication interface may be a transceiver or an input/output interface.

In another implementation, the apparatus is a chip disposed in a network device. When the apparatus is the chip disposed in the network device, the communication interface may be an input/output interface.

In an implementation, the apparatus is a donor node device. When the apparatus is the donor node device, the communication interface may be a transceiver or an input/output interface.

In another implementation, the apparatus is a chip disposed in a donor node. When the apparatus is the chip disposed in the donor node, the communication interface may be an input/output interface. Optionally, the transceiver may be a transceiver circuit. Optionally, the input/output interface may be an input/output circuit.

Optionally, the transceiver may be a transceiver circuit. Optionally, the input/output interface may be an input/output circuit.

A fifth aspect provides a processor, including an input circuit, an output circuit, and a processing circuit. The processing circuit is configured to: receive a signal via the input circuit, and transmit the signal via the output circuit, to enable the processor to perform the method in any possible implementation of the third aspect.

In a specific implementation process, the processor may be one or more chips. The input circuit may be an input pin. The output circuit may be an output pin. The processing circuit may be a transistor, a gate circuit, a trigger, any logic circuit, or the like. An input signal received by the input circuit may be, for example, but not limited to, received and input by a transceiver, a signal output by the output circuit may be, for example, but not limited to, output to a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

A sixth aspect provides a processing apparatus, including a processor and a memory. The processor is configured to: read instructions stored in the memory, receive a signal via a transceiver, and transmit the signal via a transmitter, to perform the method in any possible implementation of the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated to a same chip, or may be separately disposed on different chips. A type of the memory and a manner of setting the memory and the processor are not limited in embodiments of this application.

It should be understood that, a related data exchange process, for example, sending indication information may be a process of outputting the indication information from the processor, and receiving capability information may be a process of receiving input capability information by the processor. Specifically, data output by the processor may be output to the transmitter, and input data received by the processor may be from the transceiver. The transmitter and the transceiver may be collectively referred to as a transceiver.

The processing apparatus in the sixth aspect may be one or more chips. The processor in the processing apparatus may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor, and exists independently.

A seventh aspect provides a computer program product. The computer program product includes a computer program (which may also be referred to as code or instructions). When the computer program is run, a computer is enabled to perform the method in any possible implementation of the third aspect.

An eighth aspect provides a computer-readable storage medium. The computer-readable storage medium stores a computer program (which may also be referred to as code or instructions). When the computer program is run on a computer, the computer is enabled to perform the method in any possible implementation of the third aspect.

A ninth aspect provides a chip system, including a processor, configured to: invoke a computer program from a memory and run the computer program, to enable a device on which the chip system is installed to perform the method in the implementations of the third aspect.

A tenth aspect provi des a communication system. The communication system includes the apparatus in the fourth aspect.

### BRIEF DESCRIPTION OF DRAWINGS

FIG. 1 is a schematic diagram of a scenario applicable to this application;
FIG. 2 is a schematic diagram of an architecture of a communication device 100 according to this application;
FIG. 3 is a schematic diagram of an architecture of a communication device 200 according to this application;
FIG. 4 is a schematic diagram of a timeslot design according to this application;
FIG. 5 is a schematic diagram of an architecture of a communication device 300 according to this application;
FIG. 6 is a schematic diagram of an architecture of a communication device 400 according to this application;
FIG. 7 is a schematic diagram of a timeslot design according to this application;
FIG. 8 is a schematic diagram in which a high frequency multiplexes a low frequency channel according to this application;
FIG. 9 is a schematic diagram of an architecture of a communication device 700 according to this application;
FIG. 10 is a schematic diagram of a timeslot design according to this application;
FIG. 11 is a schematic diagram of an architecture of a communication device 900 according to this application;
FIG. 12 is a schematic diagram of a timeslot design according to this application; and
FIG. 13 is a schematic diagram of a communication apparatus according to this application.

### DESCRIPTION OF EMBODIMENTS

A wireless communication system used in embodiments of this application includes but is not limited to a global system for mobile communication (global system for mobile communication, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 5G communication system), a system integrating a plurality of access systems, or an evolved system (for example, a 6G communication system).

The technical solutions provided in this application may be further applied to machine type communication (machine type communication, MTC), long term evolution-machine (Long Term Evolution-machine, LTE-M), a device-to-device (device-to-device, D2D) network, a machine-to-machine (machine-to-machine, M2M) network, an internet of things (internet of things, IoT) network, or another network. The IoT network may include, for example, internet of vehicles. Communication manners in an internet of vehicles system are collectively referred to as vehicle to another device (vehicle to X, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

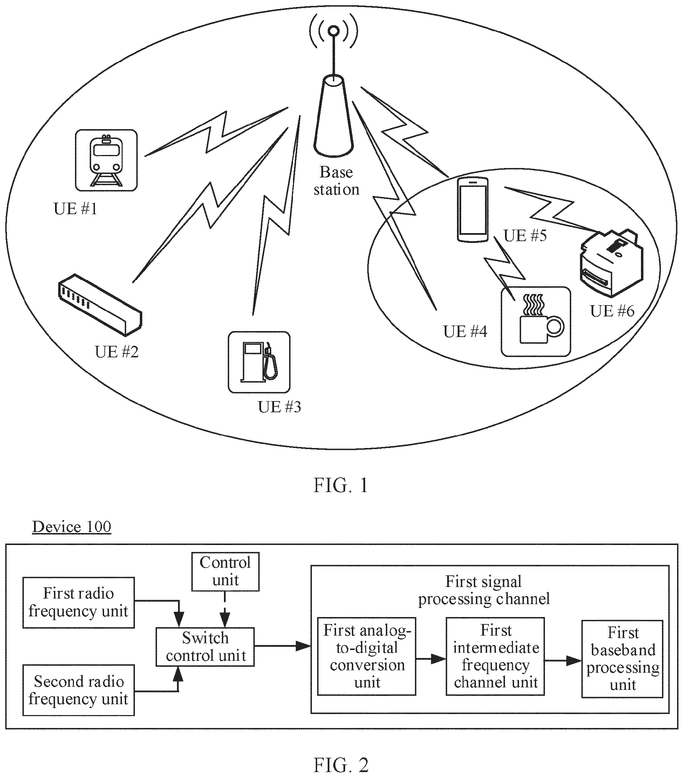

A radio access network device may be a device having a wireless transceiver function. The radio access network device may be a device that provides a wireless communication function service, is usually located on a network side, and includes but is not limited to: a next generation base station (gNodeB, gNB) in a 5th generation (5th generation, 5G) communication system, a next generation base station in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), and a base transceiver station (base transceiver station, BTS). In a network structure, the access network device may include a central unit (central unit, CU) node, a distributed unit (distributed unit, DU) node, a RAN device including the CU node and the DU node, or a RAN device including a control plane CU node, a user plane CU node, and the DU node. The access network device provides a service for a cell. User equipment communicates with a base station on a transmission resource (for example, a frequency domain resource, in other words, a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), and the like. Such small cells have features of small coverage and low transmit power, and are applicable to providing a high-speed data transmission service. The radio access network device may be a macro base station (for example, 110a in FIG. 1), may be a micro base station or an indoor base station (110b in FIG. 1), or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form used by the radio access network device are not limited in embodiments of this application. For ease of description, the following provides descriptions by using an example in which the radio access network device is a base station.

A terminal may also be referred to as a terminal device, user equipment (user equipment, UE), a mobile station (mobile station, MS), a mobile terminal (mobile terminal, MT), or the like, and may be an entity, for example, a mobile phone, that is on a user side and that is configured to receive or transmit a signal. The terminal device may be user equipment (user equipment, UE), and the UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D) communication, vehicle to everything (vehicle to everything, V2X) communication, machine type communication (machine type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. In embodiments of this application, an apparatus configured to implement a function of the terminal may be the terminal, or may be an apparatus, such as a chip system, a communication module, or a modem, that can support the terminal in implementing the function. The apparatus may be installed in the terminal. In embodiments of this application, the chip system may include a chip, or may include a chip and another discrete component. In the technical solution provided in embodiments of this application, examples in which an apparatus configured to implement a function of the terminal is the terminal and the terminal is the UE are used for describing the technical solution provided in embodiments of this application. A specific technology and a specific device form used by the terminal device are not limited in embodiments of this application.

Optionally, the UE may also be configured to serve as a base station. For example, the UE may serve as a scheduling entity that provides a sidelink signal between UE in vehicle to everything (vehicle to everything, V2X), device-to-device (device-to-device, D2D), peer to peer (peer to peer, P2P), or the like.

The base station and the terminal may be fixed or movable. The base station and the terminal may be deployed on the land, including indoor or outdoor, handheld or vehicle-mounted; may be deployed on the water; or may be deployed on an airplane, a balloon, and an artificial satellite in the air. Application scenarios of the base station and the terminal are not limited in embodiments of this application.

Communication may be performed between the base station and the terminal, between base stations, and between terminals by using a licensed spectrum, an unlicensed spectrum, or both the licensed spectrum and the unlicensed spectrum. Communication may be performed through a spectrum below 6 gigahertz (gigahertz, GHz), a spectrum above 6 GHz, or both the spectrum below 6 GHz and the spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, of the terminal, such as the smart grid, the industrial control, the smart transportation, and the smart city. The function of the terminal may alternatively be performed by a module (for example, a chip or a modem) in the terminal, or may be performed by an apparatus including the function of the terminal.

FIG. 1 is a schematic diagram of a scenario applicable to this application. As shown in FIG. 1, examples in which a network device is a base station (base station, BS) and a terminal device is user equipment (user equipment, UE) are used. In FIG. 1, the base station and UE #1 to UE #6 form a communication system. In the communication system, the UE #1 to the UE #6 may send uplink data to the base station, and the base station may receive the uplink data sent by the UE #1 to the UE #6. Alternatively, the base station may send data to the UE #1 to the UE #6, and the UE #1 to the UE #6 receive the data sent by the base station. In addition, the UE #4 to the UE #6 may also form a communication system. In the communication system, the base station may send downlink information to the UE #1, the UE #2, and the UE #5, and the UE #5 may also send downlink information to the UE #4 and the UE #6.

For ease of understanding embodiments of this application, before embodiments of this application are described, several nouns and terms in this application are first briefly described.

Subcarrier spacing (numerology): In comparison with 4G long term evolution (long term evolution, LTE), 5G new radio (new radio, NR) may support a plurality of different types of subcarrier spacings. In 5G, a parameter *µ* is generally used for representing a subcarrier spacing. For example, that *µ* is equal to 0 indicates that the subcarrier spacing is 15 kHz, and other various configurations may be shown in Table 1 below.

**Table 1 Subcarrier spacing supported by the NR**

| *µ* | Δ*f* = 2*^{µ}·*15*kHz* |
|---|---|
| 0 | 15 |
| 1 | 30 |
| 2 | 60 |
| 3 | 120 |
| 4 | 240 |

According to a formula *T* = 1 / *f* , it can be learned that *T* varies with *µ*, and a corresponding cyclic prefix (cyclic prefix, CP) also varies proportionally. In other words, as the subcarrier spacing increases, a timeslot becomes shorter. When the subcarrier spacing is 15 kHz, a symbol length is 1/15 kHz=66.7 µs, and a timeslot length is 1 ms. When the subcarrier spacing is 30 kHz, a symbol length is 1/30 kHz, and each timeslot is of 0.5 ms. When the subcarrier spacing is 120 kHz, each timeslot is of 0. 125 ms. The plurality of types of subcarrier spacings are designed for NR for a plurality of scenarios, such as a delay scenario, a high-speed movement scenario, a large-area coverage scenario, and a high frequency application scenario.

A radio frequency (radio frequency, RF) mainly refers to a high frequency electromagnetic wave whose frequency ranges from 300 kHz to 300 GHz.

An intermediate frequency is generally a form of an intermediate frequency signal. In comparison with a baseband signal and a radio frequency signal, the intermediate frequency may have one or more levels, and is a bridge between a baseband and a radio frequency.

Baseband (baseband, BB) processing: A baseband may be an inherent frequency band (which may also be understood as a frequency bandwidth) of an original electrical signal that is sent by a transmitting end and that is not modulated (for example, on which spectrum conversion is not performed), and is referred to as a basic frequency band, which is briefly referred to as a baseband. The baseband processing may include, for example, coding, multiplexing, modulation and spreading, signaling processing, local and remote operation and maintenance, working status monitoring of a base station system, and alarm information reporting.

An analog-to-digital converter (analog-to-digital converter, ADC) may be a component or software that converts an analog signal into a digital signal. For example, a typical analog-to-digital converter may convert the analog signal into a digital signal representing a proportion of voltage values. The analog-to-digital converter may convert a continuous-time and continuous-amplitude analog signal into a discrete-time and discrete-amplitude digital signal. Conversion involves quantization of an input, and consequently, a few errors or a small amount of noise is inevitably introduced. In addition, the analog-to-digital converter does not perform the conversion continuously, but performs the conversion periodically, and performs sampling on the input, so that an allowed bandwidth of an input signal is limited.

A phase shifter is an apparatus that can adjust a phase of a wave. Generally, a transmission medium introduces a phase shift to fluctuation conducted in the transmission medium. This is a principle of an early analog phase shifter. With the development of a modern electronic technology, a digital phase shift is implemented by analog-to-digital conversion and digital-to-analog conversion. The digital phase shift is a technology of discontinuous phase shifts, but has a feature of high phase shift precision.

It should be noted that, in the following embodiments of this application, examples in which the subcarrier spacing is 15 kHz, the subcarrier spacing is 30 kHz, and the subcarrier spacing is 120 kHz are used for description, and no limitation is imposed. The method provided in this application is also applicable to a case in which a current subcarrier spacing is 60 kHz or a subcarrier spacing is 240 kHz, or another subcarrier spacing defined in the future.

It should be noted that concepts of a "high frequency" and a "low frequency" in the following embodiments of this application are relative. Specific frequency bands of the "high frequency" and the "low frequency" are not limited in the technical solutions of this application. Frequency bands in the following embodiments are merely used as examples for description for ease of understanding. With evolution of technologies, the specific radio frequency bands that correspond to the "high frequency" and the "low frequency" also change, but all fall within the protection scope of this application.

In an example, a low frequency band in this application may be, for example, a low frequency band of LTE: a frequency band such as 700 MHz, 1.8 GHz, 2.1 GHz, or 2.6 GHz. A high frequency band in this application may be, for example, a frequency band of a millimeter wave: a frequency band such as 24 GHz, 26 GHz, 28 GHz, or 39 GHz.

FIG. 2 is a schematic diagram of an architecture of a communication device 100 according to this application. As shown in FIG. 2, the device includes a first radio frequency unit, a second radio frequency unit, a switch control unit, and a first signal processing channel. The first signal processing channel in this application may be used for processing a radio frequency signal. In an example, the first signal processing channel may include a first analog-to-digital conversion unit, a first intermediate frequency channel unit, and a first baseband processing unit. The switch control unit in FIG. 2 may be configured to determine, based on resource control information, to connect the first radio frequency unit or the second radio frequency unit to the first signal processing channel. In this application, a first radio frequency band in the first radio frequency unit is different from a second radio frequency band in the second radio frequency unit.

In this application, the radio frequency unit may also be understood as a remote radio unit (remote radio unit, RRU), and may also be referred to as a transceiver unit, a transceiver, a transceiver circuit, or the like. The RRU may include at least one antenna, and the RRU may be configured to receive and send a radio frequency signal.

It should be noted that, with the evolution of technologies, such components may not necessarily be included in one communication device, units (which may also be understood as "modules") may complete respective functions, and a plurality of units may be independent or may be partially combined.

The "resource control information" in this application may be configuration information of timeslots of different radio frequency bands. For example, a design of timeslot staggering may be used, so that time division sharing of an uplink channel for different frequency bands may be implemented, or time division sharing of an uplink channel or a downlink channel for different frequency bands may be implemented. The "timeslot staggering" in this application may be: For various subcarrier spacings, minimum timeslot (timeslot) units of the subcarrier spacings are staggered. The following provides detailed descriptions with reference to the accompanying drawings in specific embodiments.

It should be noted that a device in this application may further include a control unit. The control unit is configured to send the resource control information to the switch control unit. In this application, the control unit may be configured to stagger the timeslots based on the resource control information, and may be further configured to control a frequency band for connecting to a channel. It should be understood that, although the "control unit" is not shown in the following embodiments of this application, there may be a "control unit" similar to that in FIG. 2 in the following embodiments. Details are not described below again.

The control unit in this application may be integrated into the device, or may be independent of the device. Details are not described in the following.

There may be a plurality of switch control units in this application. In other words, different radio frequency units may be controlled by different switch control units, so that processing channels are more flexibly controlled.

In this application, that a first radio frequency band in the first radio frequency unit is different from a second radio frequency band in the second radio frequency unit may include the following several cases: For example, the first radio frequency band is a high frequency band, and the second radio frequency band is a low frequency band; or the first radio frequency band is a high frequency band #B1, and the second radio frequency band is a high frequency band #B2; or the first radio frequency band is a low frequency band #B1, and the second radio frequency band is a low frequency band #B2.

It can be learned from the foregoing that, in this embodiment, when there are two radio frequency bands, the signal processing channel may be multiplexed, and the processing channel on the two frequency bands may be shared.

In the following embodiments of this application, by way of example but not limitation, an example in which a "resource unit" is a "timeslot" is used for description.

It should be noted that, in the following description, for brevity, the "switch control unit" is described as a "switch". In other words, the "switch" in this application may also be understood as the "switch control unit". Details are not described below again.

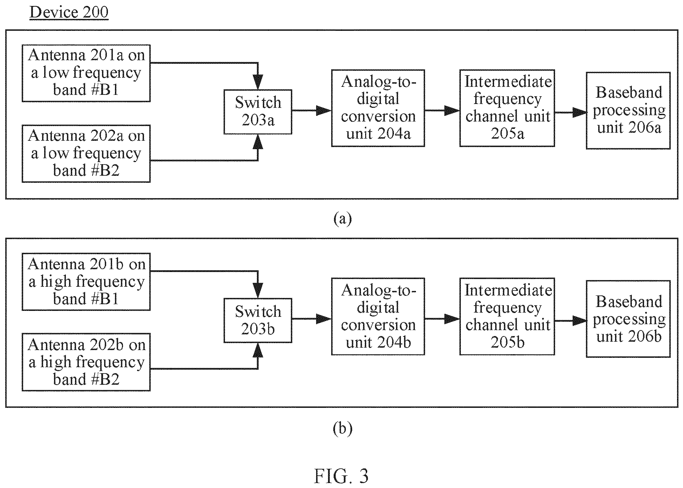

FIG. 3 is a schematic diagram of an architecture of a communication device 200 according to this application. As shown in (a) in FIG. 3, switching of a switch, for example, a switch 203a, may be used, to separately connect an antenna 201a on a low frequency band #B1 and an antenna 202a on a low frequency band #B2 to an uplink channel, and a manner of timeslot staggering is used, to implement time division sharing of the uplink channel for different frequency bands. In an example, in a timeslot #A, the antenna 201 on the low frequency band #B1 may be connected to an analog-to-digital conversion unit 204a, an intermediate frequency channel unit 205a, and a baseband processing unit 206 via the switch 203a, to perform uplink working. In another example, in a timeslot #B, the antenna 202 on the low frequency band #B2 may be connected to an analog-to-digital conversion unit 204a, an intermediate frequency channel unit 205a, and a baseband processing unit 206a via the switch 203a, to perform uplink working. In this application, a design of timeslot staggering may be used, to implement time division sharing of the uplink channel for the different frequency bands.

In this application, in a possible implementation, the antenna 201a may be a radio frequency antenna. Optionally, the antenna 201a may alternatively be an antenna array. In the following embodiments, all related antenna units may be implemented in the foregoing manner. Details are not described again in the following.

As shown in (b) in FIG. 3, switching of a switch, for example, a switch 203b, may be used, to separately connect an antenna 201b on a high frequency band #B1 and an antenna 202b on a high frequency band #B2 to an uplink channel, and a manner of timeslot staggering is used, to implement time division sharing of the uplink channel for different frequency bands. In an example, in a timeslot #C, the antenna 201b on the high frequency band #B1 may be connected to an analog-to-digital conversion unit 204b, an intermediate frequency channel unit 205b, and a baseband processing unit 206 via the switch 203b, to perform uplink working. In another example, in a timeslot #D, the antenna 202b on the high frequency band #B2 may be connected to an analog-to-digital conversion unit 204b, an intermediate frequency channel unit 205b, and a baseband processing unit 206b via the switch 203b, to perform uplink working. In this application, a design of timeslot staggering is used, to implement time division sharing of the uplink channel for the different frequency bands.

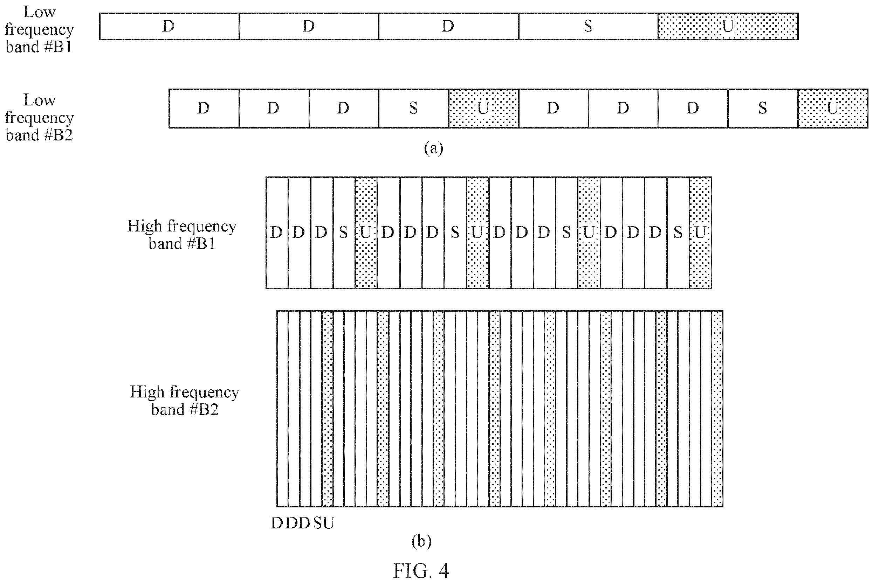

For a schematic diagram of an architecture of the communication device 200 shown in FIG. 3, this application further provides a timeslot design. FIG. 4 is a schematic diagram of a timeslot design in a case in which subcarrier spacings of different frequency bands are different. "D" corresponds to a downlink timeslot (downlink timeslot), "U" corresponds to an uplink timeslot (uplink timeslot), and "S" corresponds to a special timeslot. The special timeslot may include three fields: a downlink pilot timeslot (downlink pilot timeslot, DwPTS), a guard period (guard period, GAP), and an uplink pilot timeslot (uplink pilot timeslot, UpPTS). The DwPTS transmits a downlink reference signal, or may transmit some control information. The UpPTS may transmit some short random access channel (random access channel, RACH) and sounding reference signal (sounding reference signal, SRS) information. The GAP is a protection time period between an uplink and a downlink. A sum of duration of the three fields is equal to 1 ms. There are nine different configurations of the special timeslot, corresponding to different lengths of the DwPTS and the UpPTS. Specific definitions are in Table 4.2.1 in the 3GPP TS 36.211. Details are not described in this application.

In an example, (a) in FIG. 4 shows a possible timeslot design in a case in which subcarrier spacings of different low frequency bands are different in this application. The timeslot design in (a) in FIG. 4 in this application may correspond to (a) in the architectural diagram FIG. 3. As shown in (a) in FIG. 4, in this case, subcarrier spacings of two low frequency bands are different, and may meet a multiple relationship. A timeslot configuration in (a) in FIG. 4 may be as follows: A "U" timeslot of a low frequency band #B1 with a subcarrier spacing of 15 kHz is staggered with a "U" timeslot of a low frequency band #B2 with a subcarrier spacing of 30 kHz. For example, based on different subcarrier configurations of different frequency bands, the "U" timeslot of the low frequency band #B1 may correspond to a "D" timeslot of the low frequency band #B2. For another example, the "U" timeslot of the low frequency band #B1 may correspond to a "D" timeslot of the low frequency band #B2 and an "S" timeslot of the low frequency band #B2. For another example, the "U" timeslot of the low frequency band #B1 may correspond to an "S" timeslot of the low frequency band #B2. Similarly, for the low frequency band #B2, the "U" timeslot of the low frequency band #B2 may correspond to a "D" timeslot of the low frequency band #B1. For another example, the "U" timeslot of the low frequency band #B2 may correspond to a "D" timeslot of the low frequency band #B1 and an "S" timeslot of the low frequency band #B1. For another example, the "U" timeslot of the low frequency band #B2 may correspond to an "S" timeslot of the low frequency band #B1. In this way, two low frequencies are staggered in a time division manner during uplink working.

In this application, that the "U" timeslot of the low frequency band #B1 corresponds to the "D" timeslot of the low frequency band #B2 may be understood as: A start symbol of the "U" timeslot of the low frequency band #B1 may be aligned with a start symbol of a "D" timeslot of the low frequency band #B2, and an end symbol of the "U" timeslot of the low frequency band #B1 may also be aligned with an end symbol of a "D" timeslot of the low frequency band #B2. A specific quantity of "D" timeslots of the low frequency band #B2 is not limited in this application. For example, if the subcarrier spacing of the low frequency band #B1 is 15 kHz, and the subcarrier spacing of the low frequency band #B2 is 30 kHz, one "U" timeslot of the low frequency band #B1 may correspond to two consecutive "D" timeslots of the low frequency band #B2. In other words, a start symbol of the low frequency band #B1 is aligned with a start symbol of the first "D" timeslot of the low frequency band #B2, and an end symbol of the low frequency band #B1 is aligned with an end symbol of a next "D" timeslot of the low frequency band #B2. For another example, if the subcarrier spacing of the low frequency band #B1 is 15 kHz, and the subcarrier spacing of the low frequency band #B2 is 60 kHz, one "U" timeslot of the low frequency band #B1 may correspond to four consecutive "D" timeslots of the low frequency band #B2. In other words, a start symbol of the "U" timeslot of the low frequency band #B1 is aligned with a start symbol of the first "D" timeslot in the four consecutive "D" timeslots of the low frequency band #B2, and an end symbol of the "U" timeslot of the low frequency band #B1 is aligned with an end symbol of the fourth "D" timeslot in the four consecutive "D" timeslots of the low frequency band #B2.

Similarly, that the "U" timeslot of the low frequency band #B1 may correspond to an "S" timeslot of the low frequency band #B2 may also be understood with reference to the foregoing description.

In this application, that the "U" timeslot of the low frequency band #B1 corresponds to a "D" timeslot of the low frequency band #B2 and an "S" timeslot of the low frequency band #B2 may be understood as follows: The "D" timeslot of the low frequency band #B2 and the "S" timeslot of the low frequency band #B2 are two consecutive timeslots. A start symbol of the "U" timeslot of the low frequency band #B1 is aligned with a start symbol of the "D" timeslot of the low frequency band #B2, and an end symbol of the "U" timeslot of the low frequency band #B1 is aligned with an end symbol of the "S" timeslot of the low frequency band #B2, or a start symbol of the "U" timeslot of the low frequency band #B1 is aligned with a start symbol of the "S" timeslot of the low frequency band #B2, and an end symbol of the "U" timeslot of the low frequency band #B1 is aligned with an end symbol of the "D" timeslot of the low frequency band #B2.

In an example, (b) in FIG. 4 shows a possible timeslot design in a case in which subcarrier spacings of different high frequency bands are different in this application. The timeslot design in (b) in FIG. 4 in this application may correspond to (b) in FIG. 3 that is an architectural diagram. As shown in (b) in FIG. 4, in this case, subcarrier spacings of two high frequency bands are different, and may also meet a multiple relationship. A timeslot configuration in (b) in FIG. 4 may be as follows: A "U" timeslot of a high frequency band #B1 with a subcarrier spacing of 120 kHz is staggered with a "U" timeslot of a high frequency band #B2 with a subcarrier spacing of 240 kHz. For example, based on different subcarrier configurations of different frequency bands, the "U" timeslot of the high frequency band #B1 may correspond to a "D" timeslot of the high frequency band #B2. For another example, the "U" timeslot of the high frequency band #B1 may correspond to a "D" timeslot of the high frequency band #B2 and an "S" timeslot of the high frequency band #B2. For another example, the "U" timeslot of the high frequency band #B1 may correspond to an "S" timeslot of the high frequency band #B2. Similarly, for the high frequency band #B2, the "U" timeslot of the high frequency band #B2 may correspond to a "D" timeslot of the high frequency band #B1. For another example, the "U" timeslot of the high frequency band #B2 may correspond to a "D" timeslot of the high frequency band #B1 and an "S" timeslot of the high frequency band #B1. For another example, the "U" timeslot of the high frequency band #B2 may correspond to an "S" timeslot of the high frequency band #B1. In this way, two high frequencies are staggered in a time division manner during uplink working.

It should be understood that the timeslot design in (a) in FIG. 4 and the timeslot design in (b) in FIG. 4 are merely examples of this application, and this application is not limited to merely the timeslot configuration (which may also be understood as "design") manner shown in the figure. It should be understood that any configuration manner that meets a case in which the "U" timeslot of the frequency band #B1 is staggered with the "U" timeslot of the frequency band #B2 should fall within the protection scope of this application.

In this application, timeslot staggering may mean that the "U" timeslot of the frequency band #B1 is fully staggered with the "U" timeslot of the frequency band #B2. A spacing at which the "U" timeslot of the frequency band #B1 is staggered with the "U" timeslot of the frequency band #B2 is not limited in this application. Such description is not provided in timeslot designs in the following examples again.

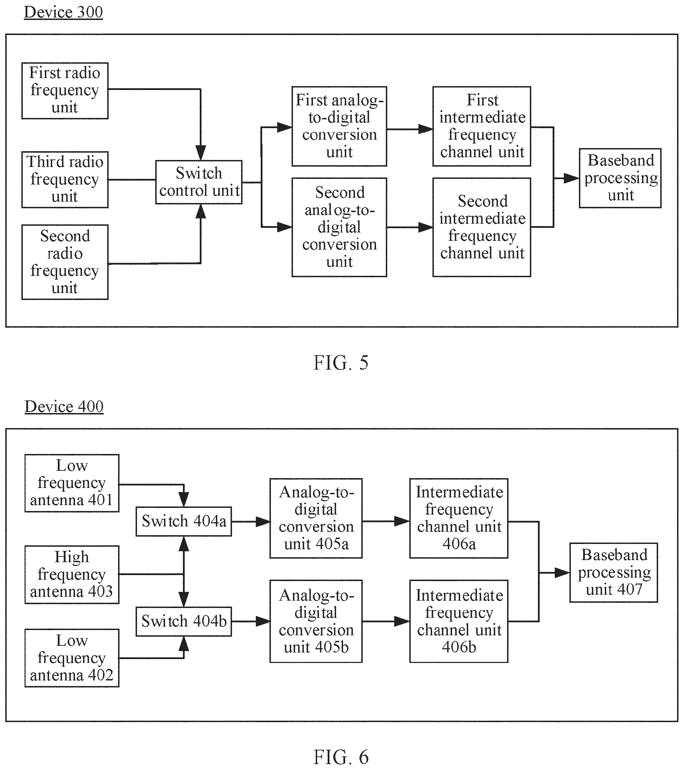

FIG. 5 is a schematic diagram of an architecture of a communication device 300 according to this application. As shown in FIG. 5, the device 300 includes: a first radio frequency unit, a second radio frequency unit, a third radio frequency unit, a first signal processing channel, and a second signal processing channel. The first signal processing channel is configured to process a received or sent radio frequency signal, and the first signal processing channel includes: a first analog-to-digital conversion unit, a first intermediate frequency channel unit, and a baseband processing unit. The second signal processing channel is configured to process the received or sent radio frequency signal, and the second signal processing channel includes: a second analog-to-digital conversion unit and a second intermediate frequency channel unit. In the device 300, a switch control unit is configured to connect one or more of the first radio frequency unit, the second radio frequency unit, and the third radio frequency unit to the first signal processing channel and/or the second signal processing channel based on resource information. At least two of a first radio frequency band, a second radio frequency band, and a third radio frequency band of the third radio frequency unit are different. When the first signal processing channel and the second signal processing channel are uplink signal processing channels, uplink timeslots of two radio frequency bands with different frequency bands are staggered.

In this application, the second signal processing channel is a channel used for processing a received or sent radio frequency signal, and the second signal processing channel may further include another radio frequency unit. This is not limited.

In this application, a design of timeslot staggering may be used, so that time division sharing of an uplink channel for different frequency bands may be implemented, or time division sharing of an uplink channel or a downlink channel for different frequency bands may be implemented.

In this application, at least two of the first radio frequency band of the first radio frequency unit, the second radio frequency band of the second radio frequency unit, and the third radio frequency band of the third radio frequency unit are different. This may include the following several cases.

(1) One of the three radio frequency bands is a high frequency band, and the other two are low frequency bands.

For example, the first radio frequency band is the high frequency band, the second radio frequency band is a low frequency band #B1, and the third radio frequency band is the low frequency band #B1. That is, the second radio frequency band and the third radio frequency band are same low frequency bands.

In this case, timeslots may be designed, so that a timeslot of the high frequency band is staggered with a timeslot of the low frequency band, and the high frequency band and the low frequency band share an uplink channel, or share the uplink channel or a downlink channel. For example, when the high frequency band works, uplink channels on the two low frequency bands may be multiplexed, to implement convergence of a high frequency processing channel and low frequency processing channels.

(2) One of the three radio frequency bands is a high frequency band, and the other two radio frequency bands are different low frequency bands.

For example, the first radio frequency band is the high frequency band, the second radio frequency band is a low frequency band #B1, and the third radio frequency band is a low frequency band #B2. That is, the second radio frequency band and the third radio frequency band are the different low frequency bands.

In this case, timeslots may be designed, so that a timeslot of the high frequency band is staggered with a timeslot of the low frequency band, and the high frequency band and the low frequency band share an uplink channel, or share the uplink channel or a downlink channel. For example, when the high frequency band works, uplink channels on the two low frequency bands may be multiplexed, to implement convergence of a high frequency processing channel and low frequency processing channels.

(3) One of the three radio frequency bands is a low frequency band, and the other two radio frequency bands are different high frequency bands.

For example, the first radio frequency band is a high frequency band #B1, the second radio frequency band is a high frequency band #B2, and the third radio frequency band is the low frequency band. That is, the first radio frequency band and the second radio frequency band are the different high frequency bands.

In this case, timeslots may be designed, so that a timeslot of the high frequency band is staggered with a timeslot of the low frequency band, and the high frequency band and the low frequency band share an uplink channel, or share the uplink channel or a downlink channel. For example, when the low frequency band works, signal processing channels for the high frequency bands may be used.

(4) The three radio frequency bands are all high frequency bands, and are different frequency bands of the high frequency bands.

For example, the first radio frequency band is a high frequency band #B1, the second radio frequency band is a high frequency band #B2, and the third radio frequency band is a high frequency band #B3.

In this case, timeslots may be designed, so that timeslots of all frequency bands of high frequencies are staggered, and all the frequency bands of the high frequencies share an uplink channel, or share the uplink channel or a downlink channel. For example, when the high frequency band #B2 works, a signal processing channel for the high frequency band #B1 may be used.

(5) The three radio frequency bands are all low frequency bands, and are different frequency bands of the low frequency bands.

For example, the first radio frequency band is a low frequency band #B1, the second radio frequency band is a low frequency band #B2, and the third radio frequency band is a low frequency band #B3.

In this case, timeslots may be designed, so that timeslots of all frequency bands of low frequencies are staggered, and the all frequency bands of the low frequencies share an uplink channel, or share the uplink channel or a downlink channel. For example, when the low frequency band #B2 works, a signal processing channel for the low frequency band #B1 may be used.

It can be learned from the foregoing that, in this embodiment, when there are a plurality of radio frequency bands, a signal processing channel may be multiplexed, and a plurality of processing channels for a plurality of frequency bands may be shared. In comparison with a conventional technology in which a signal processing channel is designed for each frequency band, in the solution in this embodiment, timeslots of different frequency bands are staggered by optimizing a processing channel and designing timeslots of different frequency bands, so that time division sharing of an uplink channel on the different frequency bands is implemented, or time division sharing of an uplink channel or a downlink channel for different frequency bands is implemented, thereby reducing costs and miniaturizing a communication design. In addition, when there are both a high frequency band and a low frequency band in a plurality of frequency bands, and a total bandwidth resource of channels remains unchanged, a small bandwidth resource of a plurality of low frequency channels may be multiplexed by the high frequency band. In this way, a high frequency processing channel and low frequency processing channels are converged, thereby reducing costs, and miniaturizing a communication design.

It should be understood that, based on the technical solution recorded in this application, the foregoing cases may be implemented. To avoid repetition, the following provides a specific implementation in this application for an architecture in which a high frequency and a low frequency are converged.

FIG. 6 is a schematic diagram of an architecture of a communication device 400 according to this application. An architecture in this embodiment may be applicable to a case in which different frequency bands (for example, a high frequency band and a low frequency band) share an uplink processing channel. This embodiment is also applicable to a case in which subcarrier spacings are different. It should be understood that, for a case in which subcarrier spacings of the different frequency bands are different, due to a limitation of a current protocol frame structure, in this case, uplink channel sharing may be implemented by staggering uplink timeslots. For example, the different frequency bands may share a digital-to-analog/analog-to-digital conversion unit, an intermediate frequency channel unit, and a baseband processing unit. This may also be understood as that when the subcarrier spacings of the different frequency bands are different, the communication device 400 in this embodiment of this application may implement uplink resource sharing.

FIG. 6 is an architectural diagram of an uplink resource corresponding to a case in which subcarrier spacings of different frequency bands are the same. In FIG. 6, switching of a switch, for example, a switch 404a or 404b, may be used, to separately connect a low frequency antenna 401 or a low frequency antenna 402 to an uplink channel, or connect a high frequency antenna 402 (antenna in package, AIP) to uplink channels. In addition, a manner of timeslot staggering is used, to implement time division sharing of the uplink channels for different frequency bands.

In an example, in a timeslot #A, the low frequency antenna 401 may be connected to an analog-to-digital conversion unit 405a, an intermediate frequency channel unit 406a, and a baseband processing unit 407 via the switch 404a, and the low frequency antenna 402 may be connected to an analog-to-digital conversion unit 405b, an intermediate frequency channel unit 406b, and the baseband processing unit 407 via the switch 404b. As described above, in this embodiment, a low frequency band of the low frequency 401 and a low frequency band of the low frequency 402 may be the same or may be different. This is not limited in this embodiment. It should be understood that, in this embodiment, two low frequency subcarrier spacings may be the same, and timeslot designs may be the same. Certainly, when the low frequency antenna 401 and the low frequency antenna 402 work, the two switches 404a and 405a in FIG. 6 may alternatively be connected together. In this case, the low frequency antenna 401 and the low frequency antenna 402 may share one analog-to-digital conversion unit, one intermediate frequency channel unit, and the baseband processing unit.

In another example, in a timeslot #B, the high frequency antenna 402 may be connected to an analog-to-digital conversion unit 405a, an intermediate frequency channel unit 406a, and a baseband processing unit 407 via the switch 404a, and connected to an analog-to-digital conversion unit 405b, an intermediate frequency channel unit 406b, and a baseband processing unit 407 via the switch 404b. As shown in FIG. 6, two low frequency uplink channels may be multiplexed by a high frequency during uplink working.

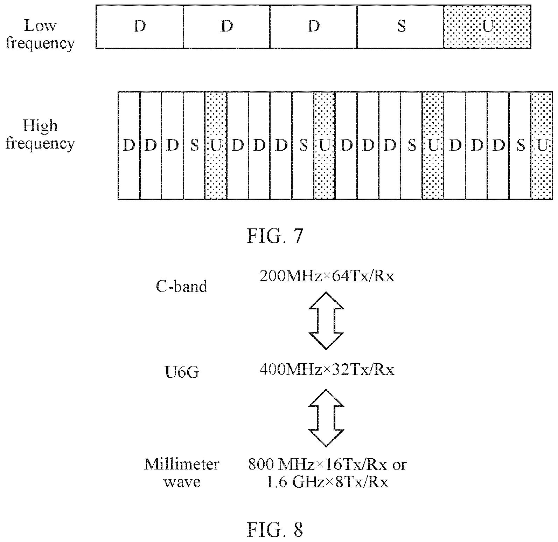

For the communication device shown in FIG. 6, this application further provides a timeslot design. In an example, FIG. 7 is a possible timeslot design in a case in which a high frequency subcarrier spacing and a low frequency subcarrier spacing are different in this application. As shown in FIG. 7, in this case, the high frequency subcarrier spacing and two low frequency subcarrier spacings are different (where for example, the low frequency subcarrier spacing is 30 kHz, and the high frequency subcarrier spacing is 120 kHz), but meet a multiple relationship. A timeslot configuration in FIG. 7 may be as follows: When a multiple relationship between subcarrier spacings is met, a high frequency "U" timeslot is staggered with a low frequency "U" timeslot. For example, based on different subcarrier configurations of different frequency bands, the high frequency "U" timeslot may correspond to a low frequency "D" timeslot. For another example, the high frequency "U" timeslot may correspond to a low frequency "D" timeslot and a low frequency "S" timeslot. For another example, the high frequency "U" timeslot may correspond to a low frequency "S" timeslot. Similarly, for a low frequency, this is also the same. Details are not described again.

In this case, a high frequency receive channel may be staggered with a low frequency receive channel in a time division manner. For example, when a high frequency band works, the high frequency "U" timeslot is staggered with the low frequency "U" timeslot; when a low frequency band works, the low frequency "U" timeslot is staggered with the high frequency "U" timeslot. As shown in FIG. 6, a high frequency multiplexes a low frequency uplink timeslot channel on an uplink. The high frequency band or the low frequency band is used by switching a switch, and an analog-to-digital conversion unit, an intermediate frequency channel unit, and a baseband processing unit may be shared. As shown in FIG. 8, in an example, it is assumed that a bandwidth of a low frequency is 200 MHz, and there are 64 uplink and/or downlink channels (which may also be understood as receive (transmitter, TX) channels and/or transmit (receiver, RX) channels). According to the technical solution provided in this application, a high frequency may multiplex a low frequency channel. It is assumed that a bandwidth of a high frequency is 400 MHz, and an uplink is used as an example. To be specific, two 200M uplink channels may be merged into one 400 MHz uplink channel. It is assumed that a bandwidth of a high frequency is 800 MHz, the low frequency channel may also be multiplexed in this case. To be specific, four 200M uplink channels may be merged into one 800 MHz uplink channel. Alternatively, it is assumed that a bandwidth of a high frequency is 1.6 GHz. This may also be understood as that eight 200M uplink channels may be merged into one 1.6 GHz uplink channel. In other words, in this application, when a total bandwidth resource of channels remains unchanged, a high frequency analog-to-digital conversion unit may splice low frequency channels, to multiplex the low frequency channels.

It should be understood that the timeslot design in FIG. 7 is merely an example of this application, and this application is not limited to merely a timeslot configuration (which may also be understood as "design") manner shown in the figure. It should be understood that any configuration manner that meets a case in which the high frequency "U" timeslot is staggered with the low frequency "U" timeslot should fall within the protection scope of this application.

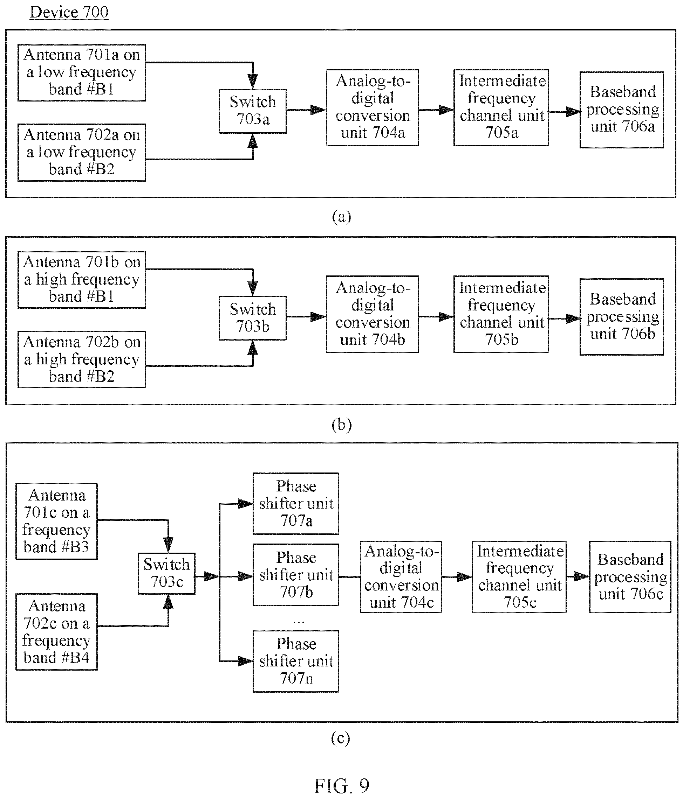

FIG. 9 is a schematic diagram of an architecture of a communication device 700 according to this application. A processing channel in this embodiment may be applicable to a case in which different frequency bands (for example, a high frequency band #B1, a high frequency band #B2, a low frequency band #B1, and a low frequency band #B2) share an uplink resource. This embodiment is also applicable to a case in which subcarrier spacings are the same. It should be understood that, for a case in which subcarrier spacings of the different frequency bands are the same, due to a limitation of a current protocol frame structure, uplink channel sharing may be implemented by staggering uplink timeslots. For example, the different frequency bands may share a digital-to-analog/analog-to-digital conversion unit, an intermediate frequency channel unit, and a baseband processing unit. It may also be understood that when the subcarrier spacings of the different frequency bands are the same, the communication device 700 in this embodiment of this application may implement uplink resource sharing.

FIG. 9 is a block diagram of an architecture in a case in which subcarrier spacings of different frequency bands are the same. As shown in (a) in FIG. 9, switching of a switch, for example, a switch 703a, may be used, to separately connect an antenna 701a on a low frequency band #B1 and an antenna 702a on a low frequency band #B2 to an uplink channel, and a manner of timeslot staggering is used, to implement time division sharing of the uplink channel for different frequency bands. In an example, in a timeslot #A, the antenna 701 on the low frequency band #B1 may be connected to an analog-to-digital conversion unit 704a, an intermediate frequency channel unit 705a, and a baseband processing unit 706 via the switch 703a, to perform uplink working. In another example, in a timeslot #B, the antenna 702 on the low frequency band #B2 may be connected to an analog-to-digital conversion unit 704a, an intermediate frequency channel unit 705a, and a baseband processing unit 706a via the switch 703a, to perform uplink working. In this application, a design of timeslot staggering may be used, to implement time division sharing of an uplink channel for different frequency bands.

As shown in (b) in FIG. 9, switching of a switch, for example, a switch 703b, may be used, to separately connect an antenna 701b on a high frequency band #B1 and an antenna 702b on a high frequency band #B2 to an uplink channel, and a manner of timeslot staggering is used, to implement time division sharing of the uplink channel for different frequency bands. In an example, in a timeslot #C, the antenna 701b on the high frequency band #B1 may be connected to an analog-to-digital conversion unit 704b, an intermediate frequency channel unit 705b, and a baseband processing unit 706 via the switch 703b, to perform uplink working. In another example, in a timeslot #D, the antenna 702b on the high frequency band #B2 may be connected to an analog-to-digital conversion unit 704b, an intermediate frequency channel unit 705b, and a baseband processing unit 706b via the switch 703b, to perform uplink working. In this application, a design of timeslot staggering is used, to implement time division sharing of the uplink channel for the different frequency bands.

It should be noted that, in this application, a processing channel may be further optimized. For example, a phase shifter unit is added. As shown in (c) in FIG. 9, switching of a switch may be used to connect antenna arrays of different frequency bands to a phase shifter and an uplink channel that includes: an analog-to-digital conversion unit 704b, an intermediate frequency channel unit 705c, and a baseband processing unit 706c. In addition, a design of timeslot staggering is used, to implement time division sharing of the phase shifter and the uplink channel for the different frequency bands. It should be noted that an antenna array 701c of a frequency band #B3 in (c) in FIG. 9 may be a low frequency band (for example, a low frequency band #B1) or a high frequency band (for example, a high frequency band #B1), and an antenna array 702c of a frequency band #B4 may be a low frequency band (for example, a low frequency band #B2) or a high frequency band (for example, a high frequency band #B2). It should be understood that there may be one or more phase shifter units in this application. A person skilled in the art may design the phase shifter unit based on an actual requirement. This is not limited.

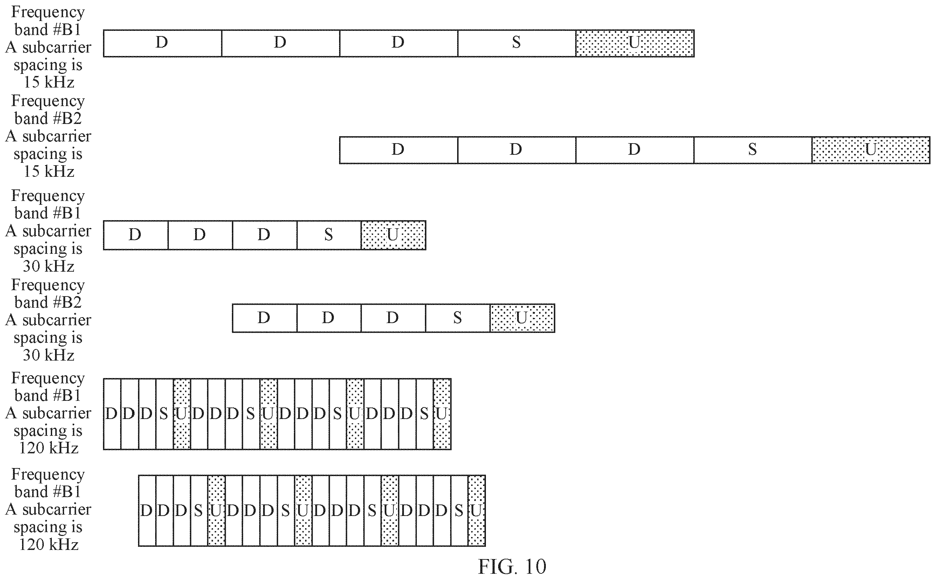

For the communication device 700 shown in FIG. 9, this application further provides a timeslot design. FIG. 10 is a schematic diagram of a timeslot design in a case in which subcarrier spacings of different frequency bands are the same.

As shown in FIG. 10, in this case, the subcarrier spacings of the different frequency bands are the same. For example, a subcarrier spacing of a low frequency band #B1 and a subcarrier spacing of a low frequency band #B2 are the same. In an example, the subcarrier spacing may be 15 kHz, 30 kHz, or 120 kHz. For another example, a subcarrier spacing of a high frequency band #B1 and a subcarrier spacing of a high frequency band #B2 are the same, and are both 15 kHz, 30 kHz, or 120 kHz. A timeslot configuration in FIG. 10 may be as follows: A "U" timeslot of a frequency band #B1 (which, for example, may be the low frequency band #B1, or may be the high frequency band #B1) is staggered with a "U" timeslot of a frequency band #B2 (which, for example, may be the low frequency band #B2, or may be the high frequency band #B2). In this case, receive channels on different frequency bands may be staggered in a time division manner. For example, as shown in (a) in FIG. 9, when the low frequency band #B1 works, a "U" timeslot of the low frequency band #B1 corresponds to a "D" timeslot of the low frequency band #B2. Certainly, the following case may alternatively occur in some timeslot configurations: When the low frequency band #B1 works, a "U" timeslot of the low frequency band #B1 corresponds to an "S" timeslot of the low frequency band #B2; when the low frequency band #B2 works, a "U" timeslot of the low frequency band #B2 corresponds to a "D" timeslot of the low frequency band #B1. Certainly, the following case may alternatively occur in some timeslot configurations: When the low frequency band #B2 works, a "U" timeslot of the low frequency band #B2 correspond to an "S" timeslot of the low frequency band #B1. Similarly, the timeslot design in this embodiment is also applicable to (b) in FIG. 9 and (c) in FIG. 9.

It should be understood that the timeslot design in FIG. 10 is merely an example of this application, and this application is not limited to merely the timeslot configuration (which may also be understood as "design") manner shown in the figure. It should be understood that any timeslot configuration manner that meets a case in which the "U" timeslot of the frequency band #B1 is staggered with the "U" timeslot of the frequency band #B2 should be included in the protection scope of this application.

For a case in which subcarrier spacings are the same, this application provides a communication device 900. In other words, a set of symmetric frame structure configurations may be designed for two different frequency bands. For example, when a frequency band #B1 works on an uplink timeslot, a frequency band #B2 works on a downlink timeslot; or when a frequency band #B1 works on a downlink timeslot, a frequency band #B2 works on an uplink timeslot. In this case, sharing of an uplink channel and a downlink channel (for example, a digital-to-analog/analog-to-digital conversion unit, an intermediate frequency channel unit, and a baseband processing unit) may be implemented. Further, a phase shifter may be shared, to further optimize application of a resource.

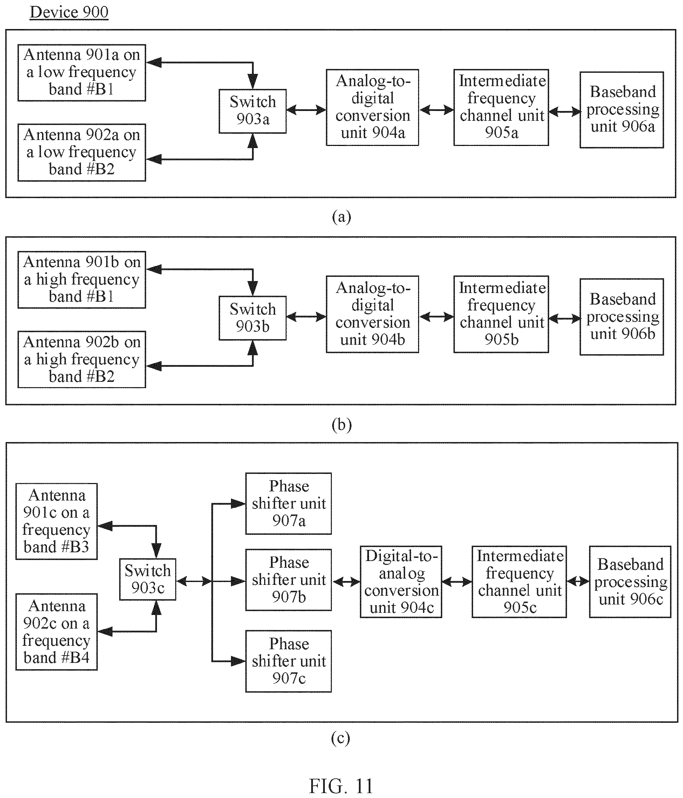

FIG. 11 is a schematic diagram of a communication device 900 according to this application. A processing channel in this embodiment may be applicable to a case in which different frequency bands (for example, a high frequency band #B1, a high frequency band #B2, a low frequency band #B1, and a low frequency band #B2) share an uplink resource and a downlink resource. For example, the different frequency bands may share a digital-to-analog/analog-to-digital conversion unit, an intermediate frequency channel unit, and a baseband processing unit. This embodiment is also applicable to a case in which subcarrier spacings are the same. This may also be understood as that when subcarrier spacings of the different frequency bands are the same, the communication device 900 in this embodiment of this application may implement uplink and downlink resource sharing.

As shown in (a) in FIG. 11, switching of a switch, for example, a switch 903a, may be used, to connect an antenna 901a of the low frequency band #B1 and an antenna 902a of the low frequency band #B2 to an uplink channel or a downlink channel, and a manner of timeslot staggering is used, to implement time division sharing of the uplink channel and the downlink channel on the different frequency bands. In an example, in a timeslot #A, the antenna 901 on the low frequency band #B1 may be connected to an analog-to-digital conversion unit 904a, an intermediate frequency channel unit 905a, and a baseband processing unit 906 via the switch 903a, to perform uplink working. In another example, in a timeslot #B, the antenna 902 on the low frequency band #B2 may be connected to an analog-to-digital conversion unit 904a, an intermediate frequency channel unit 905a, and a baseband processing unit 906a via the switch 903a, to perform downlink working. In this application, a design of timeslot staggering may be used, to implement time division sharing of the uplink channel and the downlink channel for different frequency bands.

As shown in (b) in FIG. 11, a switch, for example, a switch 903b, may be used, to connect an antenna 901b on the high frequency band #B1 and an antenna 902b on the high frequency band #B2 to an uplink channel. In addition, a manner of timeslot staggering is used, to implement time division sharing of the uplink channel and a downlink channel on the different frequency bands. Specifically, for a method of sharing a signal processing channel for a high frequency band, reference may also be made to a related operation on a low frequency band in (a) in FIG. 11. Details are not described again.

It should be noted that, in this application, a system sharing architecture and a system resource may be further optimized. For example, a phase shifter unit is added. As shown in (c) in FIG. 11, switching of a switch may be used to connect antenna arrays of different frequency bands to a phase shifter and an uplink channel that includes: an analog-to-digital conversion unit, an intermediate frequency channel unit, and a baseband processing unit. In addition, a design of timeslot staggering is used, to implement time division sharing of the phase shifter and the uplink channel for different frequency bands. It should be noted that an antenna array 901c of a frequency band #B3 in (c) in FIG. 11 may be a low frequency band (for example, a low frequency band #B1) or a high frequency band (for example, a high frequency band #B1), and an antenna array 902c of a frequency band #B4 may be a low frequency band (for example, a low frequency band #B2) or a high frequency band (for example, a high frequency band #B2). It should be understood that there may be one or more phase shifter units in this application. A person skilled in the art may design the phase shifter unit based on an actual requirement. This is not limited.

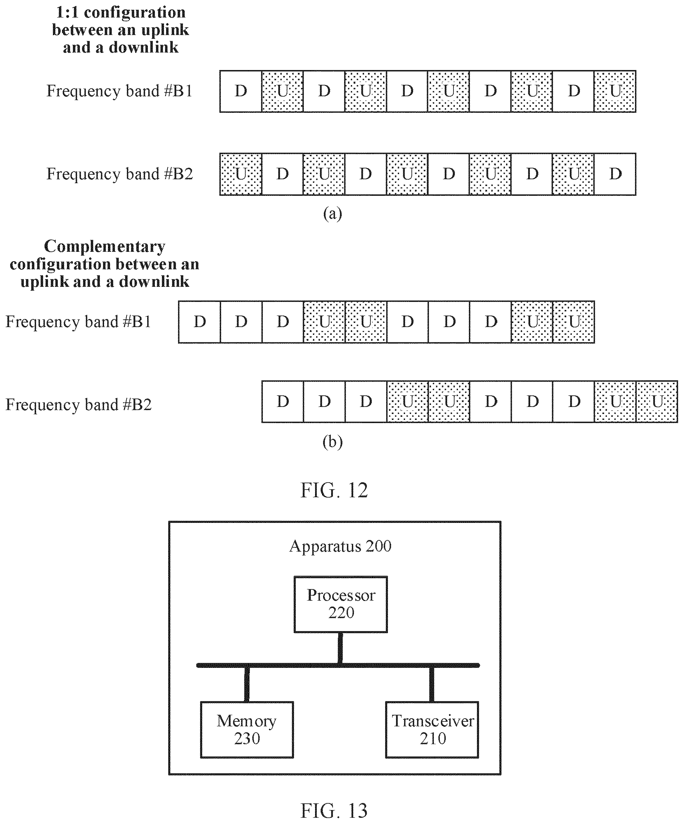

For the architectural diagram of uplink and downlink resource sharing shown in FIG. 11, this application further provides a timeslot design. FIG. 12 is a schematic diagram of a timeslot design in a case in which subcarrier spacings of different frequency bands are the same. (a) in FIG. 12 shows a timeslot designed by using an example in which a ratio of a quantity of uplink timeslots to a quantity of downlink timeslots in an uplink-to-downlink subframe ratio is configured as 1:1 in this application. As shown in (a) in FIG. 12, in this case, the subcarrier spacings of the different frequency bands are the same. For example, a subcarrier spacing of a low frequency band #B1 and a subcarrier spacing of a low frequency band #B2 are the same, and are both 15 kHz, 30 kHz, or 120 kHz. For another example, a subcarrier spacing of a high frequency band #B1 and a subcarrier spacing of a high frequency band #B2 are the same, and are both 15 kHz, 30 kHz, or 120 kHz. A timeslot configuration in (a) in FIG. 12 may be as follows: A "U" timeslot of a frequency band #B1 (which, for example, may be the low frequency band #B1 or may be the high frequency band #B1) corresponds to a "D" timeslot of a frequency band #B2 (which, for example, may be the low frequency band #B2 or may be the high frequency band #B2), and a "D" timeslot of the frequency band #B1 corresponds to a "U" timeslot of the frequency band #B2. In this case, an uplink channel and a downlink channel for different frequency bands may be staggered in a time division manner. For example, as shown in (a) in FIG. 11, when the low frequency band #B1 performs uplink working, a "U" timeslot of the low frequency band #B1 corresponds to a "D" timeslot of the low frequency band #B2; when the low frequency band #B1 performs downlink working, a "D" timeslot of the low frequency band #B1 corresponds to a "U" timeslot of the low frequency band #B2. Uplink working of the low frequency band #B2 is similar. As shown in (a) in FIG. 11, when the low frequency band #B2 performs uplink working, the "U" timeslot of the low frequency band #B2 corresponds to the "D" timeslot of the low frequency band #B1; when the low frequency band #B2 performs downlink working, the "D" timeslot of the low frequency band #B2 corresponds to the "U" timeslot of the low frequency band #B1. Similarly, the timeslot design in this embodiment is also applicable to (b) in FIG. 11 and (c) in FIG. 11.

(b) in FIG. 12 shows a timeslot designed by using an example in which an uplink subframe and a downlink subframe are configured in a complementary manner in this application. As shown in (b) in FIG. 12, in this case, the subcarrier spacings of the different frequency bands are the same. For example, a subcarrier spacing of a low frequency band #B1 and a subcarrier spacing of a low frequency band #B2 are the same. A timeslot configuration in (b) in FIG. 12 may be as follows: A "U" timeslot of a frequency band #B1 (which, for example, may be the low frequency band #B1 or may be a high frequency band #B1) corresponds to a "D" timeslot of a frequency band #B2 (which, for example, may be the low frequency band #B2 or may be a high frequency band #B2), and a "D" timeslot of the frequency band #B1 corresponds to a "U" timeslot of the frequency band #B2. In this case, an uplink channel and a downlink channel for different frequency bands may be staggered in a time division manner. For example, as shown in (b) in FIG. 12, when the high frequency band #B1 performs uplink working, a "U" timeslot of the high frequency band #B1 corresponds to a "D" timeslot of the high frequency band #B2; when the high frequency band #B1 performs downlink working, a "D" timeslot of the high frequency band #B1 corresponds to a "U" timeslot of the high frequency band #B2. Similarly, the timeslot design in this embodiment is also applicable to (a) in FIG. 11 and (c) in FIG. 11.

It should be understood that the timeslot design in FIG. 12 is merely an example of this application, and this application is not limited to merely the timeslot configuration (which may also be understood as "design") manner shown in the figure. It should be understood that any timeslot configuration manner that meets a case in which the "U" timeslot of the frequency band #B1 is staggered with the "U" timeslot of the frequency band #B2, and the "D" timeslot of the frequency band #B1 is staggered with the "D" timeslot of the frequency band #B2 should fall within the protection scope of this application.

Embodiments described in this application may be independent solutions, or may be combined based on internal logic. The solutions all fall within the protection scope of this application.

This application further provides a communication method, and the method includes: A switch control unit determines, based on resource control information, to connect a first radio frequency unit or a second radio frequency unit to a first signal processing channel. A first radio frequency band in the first radio frequency unit is different from a second radio frequency band in the second radio frequency unit. The first signal processing channel includes a first analog-to-digital conversion unit, a first intermediate frequency channel unit, and a first baseband processing unit.

In some possible implementations, the method further includes: a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

In some possible implementations, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered.

In some possible implementations, the method further includes: a third radio frequency unit and a second signal processing channel. The second signal processing channel is connected to the first signal processing channel. The second signal processing channel includes a second analog-to-digital conversion unit and a second intermediate frequency channel unit. That the switch control unit is configured to connect the first radio frequency unit or the second radio frequency unit to the first signal processing channel based on resource information includes: The switch control unit is configured to connect one or more of the first radio frequency unit, the second radio frequency unit, and the third radio frequency unit to the first signal processing channel and/or the second signal processing channel based on the resource information.

In some possible implementations, at least two of the first radio frequency band, the second radio frequency band, and a third radio frequency band of the third radio frequency unit are different. When the first signal processing channel and the second signal processing channel are uplink signal processing channels, uplink timeslots of two radio frequency bands with different frequency bands are staggered, and downlink timeslots of two radio frequency bands with different frequency bands are staggered.

It should be understood that the communication method in this application may be specifically applied to the communication devices provided in the foregoing embodiments of this application.

It should be understood that, a specific process in which units perform the foregoing corresponding steps has been described in detail in the foregoing embodiments. For brevity, details are not described herein.

FIG. 13 is a schematic diagram of an architecture of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the apparatus 200 further includes a memory 230, configured to store instructions. Optionally, the apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. In specific implementation, the memory 230 may alternatively be integrated into the processor 220, or may be independent of the processor 220.

It should be further understood that the transceiver 210 may include a transceiver (or referred to as a receiver) and a transmitter (or referred to as a transmitting machine). The transceiver may further include an antenna, and there may be one or more antennas. The transceiver 210 may be a communication interface or an interface circuit.

For example, the transceiver 210 in the apparatus 200 may correspond to the radio frequency unit in the foregoing embodiments, and the processor 220 in the apparatus 200 may correspond to the switch control unit, the control unit, and the signal processing channel in the foregoing embodiments. It should be understood that a specific process in which the transceiver and the processor perform the foregoing corresponding steps is described in detail in the foregoing method embodiment. For brevity, details are not described herein.

In an implementation process, steps of the foregoing method may be completed by using an integrated logic circuit of hardware in the processor or instructions in a form of software. The steps of the method disclosed with reference to embodiments of this application may be directly performed and completed by a hardware processor, or may be performed and completed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, the steps of the foregoing method embodiment may be completed by using an integrated logic circuit of hardware in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch-link DRAM, SLDRAM), and a direct rambus random access memory (direct rambus RAM, DR RAM). It should be noted that the memory of the systems and methods described in this specification includes but is not limited to these memories and any memory of another appropriate type.

According to the communication method provided in embodiments of this application, this application further provides a computer program product. The computer program product stores computer program code. When the computer program code is run on a computer, the computer is enabled to perform the communication method shown in this application.

According to the communication method provided in embodiments of this application, this application further provides a computer-readable medium. The computer-readable medium stores program code. When the program code is run on a computer, the computer is enabled to perform the communication method in this application.

According to the communication method provided in embodiments of this application, this application further provides a system, including the foregoing apparatus or device.

All or a part of the foregoing embodiments may be implemented through software, hardware, firmware, or any combination thereof. When the software is used for implementation, all or a part of the implementation may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by the computer, or a data storage device, such as a server or a data center, integrating one or more usable media. The usable medium may be a magnetic medium (such as a floppy disk, a hard disk, or a magnetic tape), an optical medium (for example, a high-density digital video disc (digital video disc, DVD)), a semiconductor medium (for example, a solid state disc (solid state disc, SSD)), or the like.

A network side device and a terminal device in the foregoing apparatus embodiments correspond to a network side device or the terminal device in the method embodiment. A corresponding module or unit performs a corresponding step. For example, a communication unit (a transceiver) performs a receiving step or a sending step in the method embodiment, and a step other than the sending step and the receiving step may be performed by a processing unit (a processor). For a function of a specific unit, refer to the corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process of running on a processor, the processor, an object, an executable file, a thread of execution, a program, and/or a computer. As shown in figures, both an application running on a computing device and the computing device may be components. One or more components may reside within the process and/or the execution thread, and the component may be located on one computer and/or distributed between two or more computers. In addition, the components may be executed from various computer-readable media that store various data structures. For example, the components may communicate by using a local and/or remote process and based on a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a specific application and a design constraint condition of the technical solutions. A person skilled in the art may use different methods to implement the described functions for each specific application, but it should not be considered that the implementation goes beyond the scope of this application.

It may be clearly understood by a person skilled in the art that, for convenient and brief description, for a detailed working process of the foregoing system, apparatuses, and units, refer to a corresponding process in the foregoing method embodiment. Details are not described herein again.

In the several embodiments provided in this application, it should be understood that the disclosed system, apparatuses, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms.

The units described as separate parts may or may not be physically separate, and components displayed as units may or may not be physical units, and may be located at one location, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in one computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes: any medium, such as a USB flash drive, a removable hard disk, a read-only memory (read-only memory, ROM), a random access memory (random access memory, RAM), a magnetic disk, or an optical disc, that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication device, comprising:
a first radio frequency unit, a second radio frequency unit, a switch control unit, and a first signal processing channel, wherein the first signal processing channel comprises a first analog-to-digital conversion unit, a first intermediate frequency channel unit, and a first baseband processing unit; and
the switch control unit is configured to determine, based on resource control information, to connect the first radio frequency unit or the second radio frequency unit to the first signal processing channel, wherein
a first radio frequency band in the first radio frequency unit is different from a second radio frequency band in the second radio frequency unit.

2. The device according to claim 1, wherein the resource control information comprises configuration information of resource units of the first radio frequency band and the second radio frequency band.

3. The device according to claim 1 or 2, wherein when the first signal processing channel is an uplink signal processing channel, an uplink timeslot of the first radio frequency band is staggered with an uplink timeslot of the second radio frequency band.

4. The device according to any one of claims 1 to 3, wherein the device further comprises: a third radio frequency unit and a second signal processing channel, and the second signal processing channel is connected to the first signal processing channel, wherein
the second signal processing channel comprises a second analog-to-digital conversion unit and a second intermediate frequency channel unit; and
that the switch control unit is configured to connect the first radio frequency unit or the second radio frequency unit to the first signal processing channel based on resource information comprises:
the switch control unit is configured to connect one or more of the first radio frequency unit, the second radio frequency unit, and the third radio frequency unit to the first signal processing channel and/or the second signal processing channel based on the resource information.

5. The device according to claim 4, wherein at least two of the first radio frequency band, the second radio frequency band, and a third radio frequency band of the third radio frequency unit are different; and
when the first signal processing channel and the second signal processing channel are uplink signal processing channels, uplink timeslots of two radio frequency bands with different frequency bands are staggered.

6. The device according to claim 1 or 2, wherein when the first signal processing channel is an uplink signal processing channel or a downlink signal processing channel, an uplink timeslot of the first radio frequency band is staggered with an uplink timeslot of the second radio frequency band, and a downlink timeslot of the first radio frequency band is staggered with a downlink timeslot of the second radio frequency band.

7. The device according to claim 6, wherein the device further comprises: a third radio frequency unit and a second signal processing channel, and the second signal processing channel is connected to the first signal processing channel, wherein
the second signal processing channel comprises a second analog-to-digital conversion unit and a second intermediate frequency channel unit; and
that the switch control unit is configured to connect the first radio frequency unit or the second radio frequency unit to the first signal processing channel based on resource information comprises:
the switch control unit is configured to connect one or more of the first radio frequency unit, the second radio frequency unit, and the third radio frequency unit to the first signal processing channel and/or the second signal processing channel based on the resource information.

8. The device according to claim 6 or 7, wherein at least two of the first radio frequency band, the second radio frequency band, and a third radio frequency band of the third radio frequency unit are different; and
when the first signal processing channel and the second signal processing channel are uplink signal processing channels or downlink signal processing channels, uplink timeslots of two radio frequency bands with different frequency bands are staggered, and downlink timeslots of two radio frequency bands with different frequency bands are staggered.

9. The device according to any one of claims 6 to 8, wherein a spacing of a resource unit of the first radio frequency band and a spacing of a resource unit of the second radio frequency band are the same, or a spacing of the resource unit of the first radio frequency band, a spacing of the resource unit of the second radio frequency band, and a spacing of a resource unit of the third radio frequency band are the same.

10. The device according to any one of claims 1 to 9, wherein there are one or more switch control units.

11. The device according to any one of claims 1 to 10, wherein the device further comprises: a control unit, wherein
the control unit is configured to send the resource control information to the switch control unit, and the control unit is configured to stagger timeslots based on the resource control information.

12. A communication apparatus, wherein the apparatus comprises the communication device according to any one of claims 1 to 11.

13. A communication method, comprising:
determining, by a switch control unit based on resource control information, to connect a first radio frequency unit or a second radio frequency unit to a first signal processing channel, a first radio frequency band in the first radio frequency unit is different from a second radio frequency band in the second radio frequency unit, and the first signal processing channel comprises a first analog-to-digital conversion unit, a first intermediate frequency channel unit, and a first baseband processing unit.

14. The method according to claim 13, wherein the resource control information comprises configuration information of resource units of the first radio frequency band and the second radio frequency band.

15. The method according to claim 13 or 14, wherein when the first signal processing channel is an uplink signal processing channel, an uplink timeslot of the first radio frequency band is staggered with an uplink timeslot of the second radio frequency band.

16. The method according to any one of claims 13 to 15, wherein the method further comprises: a third radio frequency unit and a second signal processing channel are comprised, and the second signal processing channel is connected to the first signal processing channel, wherein
the second signal processing channel comprises a second analog-to-digital conversion unit and a second intermediate frequency channel unit; and
the connecting, by a switch control unit, a first radio frequency unit or a second radio frequency unit to a first signal processing channel based on resource information comprises:
connecting, by the switch control unit, one or more of the first radio frequency unit, the second radio frequency unit, and the third radio frequency unit to the first signal processing channel and/or the second signal processing channel based on the resource information.

17. The method according to claim 16, wherein at least two of the first radio frequency band, the second radio frequency band, and a third radio frequency band of the third radio frequency unit are different; and
when the first signal processing channel and the second signal processing channel are uplink signal processing channels, uplink timeslots of two radio frequency bands with different frequency bands are staggered.

18. The method according to claim 13, wherein when the first signal processing channel is an uplink signal processing channel or a downlink signal processing channel, an uplink timeslot of the first radio frequency band is staggered with an uplink timeslot of the second radio frequency band, and a downlink timeslot of the first radio frequency band is staggered with a downlink timeslot of the second radio frequency band.

19. The method according to claim 18, wherein the method further comprises: a third radio frequency unit and a second signal processing channel, and the second signal processing channel is connected to the first signal processing channel, wherein
the second signal processing channel comprises a second analog-to-digital conversion unit and a second intermediate frequency channel unit; and
the connecting, by a switch control unit, a first radio frequency unit or a second radio frequency unit to a first signal processing channel based on resource information comprises:
connecting, by the switch control unit, one or more of the first radio frequency unit, the second radio frequency unit, and the third radio frequency unit to the first signal processing channel and/or the second signal processing channel based on the resource information.

20. The method according to claim 19, wherein at least two of the first radio frequency band, the second radio frequency band, and a third radio frequency band of the third radio frequency unit are different; and
when the first signal processing channel and the second signal processing channel are uplink signal processing channels, uplink timeslots of two radio frequency bands with different frequency bands are staggered, and downlink timeslots of two radio frequency bands with different frequency bands are staggered.

21. The method according to any one of claims 18 to 20, wherein a spacing of a resource unit of the first radio frequency band and a spacing of a resource unit of the second radio frequency band are the same, or a spacing of the resource unit of the first radio frequency band, a spacing of the resource unit of the second radio frequency band, and a spacing of a resource unit of the third radio frequency band are the same.

22. The method according to any one of claims 13 to 21, wherein there are one or more switch control units.

23. The method according to any one of claims 13 to 22, wherein the method further comprises: a control unit, wherein
the control unit sends the resource control information to the switch control unit, and the control unit staggers timeslots based on the resource control information.

24. A communication apparatus, comprising at least one processor, wherein the at least one processor is configured to execute a computer program stored in a memory, to enable the communication apparatus to implement the method according to any one of claims 13 to 23.

25. A chip system, comprising a processor, wherein the processor is configured to: invoke a computer program from a memory and run the computer program, to enable a communication apparatus on which the chip system is installed to implement the method according to any one of claims 13 to 23.

26. A computer-readable storage medium, wherein the computer-readable storage medium stores a computer program; and when the computer program is run on a computer, the computer is enabled to perform the method according to any one of claims 13 to 23.

27. A computer program product, wherein when the computer program product runs on a processor, the processor is enabled to perform the method according to any one of claims 13 to 23.
